# EUROPÄISCHE PATENTSCHRIFT

(11) **EP 3 650 829 B1**
(45) Veröffentlichungstag und Bekanntmachung des Hinweises auf die Patenterteilung: **07.04.2021**
(21) Anmeldenummer: 19152517.9
(22) Anmeldetag: 18.01.2019
(51) Int. Cl.: G01M 99/00, A62C 37/11

(54) **PRÜFANLAGE ZUR DURCHFÜHRUNG EINER BRANDBEANSPRUCHUNGSPRÜFUNG AN EINEM WASSERSTROMVENTIL**
TEST SYSTEM FOR PERFORMING A FIRE RESISTANCE PERIOD TEST FOR A WATER FLOW VALVE
SYSTÈME D'ESSAI POUR LA RÉALISATION D'UN ESSAI DE RÉSISTANCE AU FEU POUR UNE VANNE DE DÉBIT D'EAU

(30) Priorität: 08.11.2018 EP 18205130; 19.12.2018 EP 18214200
(43) Veröffentlichungstag der Anmeldung: 13.05.2020
(73) Patentinhaber: VdS Schadenverhütung GmbH, 50735 Köln (DE)
(72) Erfinder:
(74) Vertreter: Strehlke, Ingo Kurt

(56) Entgegenhaltungen:
- US-A1- 2007 240 886
- US-A1- 2015 153 252
- ANONYMOUS: "DIN EN 12259-2/A2 Fixed firefighting systems - Components for sprinkler and water spray systems - Part 2: Wet alarm valve assemblies [Ortsfeste Löschanlagen - Bauteile für Sprinkler- und Sprühwasseranlagen - Teil 2: Nassalarmventile mit Zubehör]", DIN EN STANDARD, BEUTH, DE , 1. Februar 2006 (2006-02-01), Seiten 1-9, XP009514662, Gefunden im Internet: URL:https://www.en-standard.eu/din-en-1225 9-2-a2-fixed-firefighting-systems-componen ts-for-sprinkler-and-water-spray-systems-p art-2-wet-alarm-valve-assemblies/

## Beschreibung

Die vorliegende Erfindung betrifft das technische Gebiet der Prüfverfahren zur Durchführung von Brandbeanspruchungsprüfungen an wasserführenden Systemen sowie entsprechende Komponenten und Systeme zur Durchführung derartiger Prüfverfahren.

Die vorliegende Erfindung betrifft eine Prüfanlage zur Durchführung einer Brandbeanspruchungsprüfung an einem Wasserstromventil und/oder an einem Wasserstromventilsystem, insbesondere an einem Nassalarmventil und/oder an einer Nassalarmventilstation.

Darüber hinaus wird ein Wasserstromventil, insbesondere ein Nassalarmventil für eine Nassalarmventilstation, beschrieben.

Weiterhin betrifft die vorliegende Erfindung ein Prüfsystem zur Durchführung einer Brandbeanspruchungsprüfung mit einer Prüfanlage und mindestens einem Wasserstromventil und/oder mindestens einem Wasserstromventilsystem, insbesondere einem Nassalarmventil und/oder einer Nassalarmventilstation.

Die vorliegende Erfindung betrifft darüber hinaus auch ein Prüfverfahren zur Durchführung einer Brandbeanspruchungsprüfung an einem Wasserstromventil und/oder an einem Wasserstromventilsystem, vorzugsweise an einem Nassalarmventil und/oder an einer Nassalarmventilstation.

Darüber hinaus betrifft die vorliegende Erfindung auch die Verwendung einer Prüfanlage zur Durchführung einer Brandbeanspruchungsprüfung an einem Wasserstromventil und/oder an einem Wasserstromventilsystem, vorzugsweise an einem Nassalarmventil und/oder an einer Nassalarmventilstation.

Weiterhin betrifft die vorliegende Erfindung die Verwendung eines Prüfsystems zur Durchführung einer Brandbeanspruchungsprüfung an einem Wasserstromventil und/oder an einem Wasserstromventilsystem, insbesondere an einem Nassalarmventil und/oder an einer Nassalarmventilstation.

Schließlich wird auch die Verwendung eines Wasserstromventils als Prüfling in einer Prüfanlage zur Durchführung einer Brandbeanspruchungsprüfung beschrieben.

Stationäre bzw. ortsfeste Feuerlöschanlagen, beispielsweise Sprinkleranlagen, sind ständig betriebsbereite technische Anlagen, die einen Brand mit einem Löschmittel, beispielsweise Wasser, löschen. Sie bestehen aus einer komplexen Kombination aus Rohrleitungssystemen und Wasseraustragseinrichtungen. Derartige Anlagen sollen einen Brand selbsttätig löschen oder zumindest eindämmen.

Unter dem Begriff "Wasserstromventil" ist im Sinne der vorliegenden Erfindung vorzugsweise eine Ventilbaugruppe zu verstehen, die fluidleitend zwischen einer Zulaufleitung einerseits und einer Ablaufleitung andererseits anschließbar ist. Hierzu wird das Wasserstromventil insbesondere unmittelbar mit zugeordneten Leitungsenden mit der Ablaufleitung einerseits und der Zulaufleitung andererseits verbunden. Insbesondere dient das Wasserstromventil zur Absperrung oder Steuerung des Durchflusses eines Wasserstroms, der durch das mit dem Wasserstromventil verbundene Rohrnetz geleitet wird. Besonders bevorzugt handelt es sich bei dem Wasserstromventil um ein Nassalarmventil, das als untergeordnete Baugruppe in einer Nassalarmventilstation eingesetzt wird. In diesem Zusammenhang ist das Wasserstromventil bzw. das Nassalarmventil dazu ausgebildet, beim Auslösen eines Sprinklers oder einer sonstigen automatischen Wasseraustragseinrichtung weiteres Wasser in das Rohrnetz der Feuerlöschanlage zu speisen. Demgegenüber verhindert es jedoch einen Wasserrückfluss. Üblicherweise wird das Wasserstromventil bzw. Nassalarmventil vertikal in das Rohrnetz der stationären Feuerlöschanlage eingebaut.

Unter dem Begriff "Wasserstromventilsystem" ist im Sinne der vorliegenden Erfindung insbesondere eine übergeordnete Funktionseinheit zu verstehen, die mindestens ein Wasserstromventil gemäß der vorherigen Definition umfasst. Zusätzlich umfasst das Wasserstromventilsystem weitere Komponenten, beispielsweise Entwässerungsventile, Druckmessgeräte sowie sonstige Einrichtungen zur Erfassung des durch das Wasserstromventil fließenden Wasserstroms. Insbesondere ist das Wasserstromventilsystem als Nassalarmventilstation ausgebildet, die als zentrale Baueinheit bzw. Funktionseinheit in einer automatischen Feuerlöschanlage eingesetzt wird. Eine derartige Nassalarmventilstation umfasst dabei zusätzlich zu dem zuvor erörterten Nassalarmventil auch Alarmeinrichtungen, um im Brandfall ein akustisches und/oder optisches Warnsignal auszugeben. Insofern bildet die Nassalarmventilstation eine komplette bzw. eigenständige Funktionseinheit, die neben der Steuerung des Wasserflusses im Rohrnetzwerk auch die Abgabe von Alarmsignalen im Brandfall realisiert.

Um eine zuverlässige Funktionsweise von automatischen Feuerlöschanlagen im Brandfall zu gewährleisten, werden an Nassalarmventile bzw. Nassalarmventilstationen besonders hohe Anforderungen gestellt. Vor diesem Hintergrund besteht ein hoher Bedarf an effizienten Prüfverfahren und entsprechenden Prüfsystemen, um die an die Feuerlöschanlagen gestellten Anforderungen zuverlässig zu überprüfen. Insbesondere besteht ein hoher Bedarf an einheitlichen Zertifizierungen bzw. Prüfverfahren, mit deren Hilfe die Einhaltung bestimmter Anforderungen zuverlässig nachgewiesen werden kann.

In der Norm DIN EN 12259-2 sind Anforderungen an die Konstruktion und das Leistungsvermögen von Nassalarmventilen angegeben. Hier wird ein Prüfaufbau vorgeschlagen, bei dem das zu prüfende Nassalarmventil horizontal zwischen zwei Rohrstutzen eingebaut wird. Unter dem Nassalarmventil wird eine Brennstoffwanne zur Aufnahme eines Brennmittels angeordnet. Zur Durchführung der Brandbeanspruchungsprüfung wird der Brennstoff entzündet, um eine Hitzeeinwirkung auf das Nassalarmventil zu bewirken. Nach Ablauf der Prüfdauer wird die Wanne entfernt oder das Feuer gelöscht. Im Anschluss daran wird das zuvor der Feuereinwirkung ausgesetzte Nassalarmventil aus der Prüfanlage ausgebaut und auf Schäden, beispielsweise Risse, Verformungen o. dgl., untersucht.

Das vorgenannte Prüfverfahren ist insofern nachteilig, als dass die im realen Brandfall in einer Feuerlöschanlage vorherrschenden Bedingungen nur unzureichend abgebildet werden. So sieht die in Rede stehende Norm eine horizontale Ausrichtung des Wasserstromventils vor, wohingegen im Realbetrieb ein vertikaler Einbau des Wasserstromventils in die Feuerlöschanlage vorgesehen ist. Hierzu ist beachtlich, dass die Ausrichtung des Wasserstromventils einen erheblichen Einfluss auf den Grad der Hitzebeanspruchung hat. Insofern liegt bei einer horizontalen Ausrichtung eine gegenüber der vertikalen Ausrichtung andere Brandbeanspruchungssituation vor.

Ein weiterer, ebenfalls signifikanter Unterschied der in dem Prüfverfahren gemäß der in Rede stehenden Norm DIN EN 12259-2 offenbarten Anordnung gegenüber den im Brandfall in einer Feuerlöschanlage vorherrschenden Realbedingungen ist, dass das Wasserstromventil bei einem tatsächlichen Brandfall von einem Wasserstrom durchströmt wird. Demgegenüber ist bei der Prüfanordnung in der in Rede stehenden Norm lediglich Restwasser in dem Wasserstromventil enthalten. Dies kann zu einer nicht unerheblichen Verfälschung der Prüfergebnisse führen, da die tatsächliche Belastungssituation bei einem unter Realbedingungen auftretenden Brand nur unzureichend abgebildet wird.

Ebenfalls ist beachtlich, dass unter Realbedingungen bei einer automatischen Feuerlöschanlage nach der Erfassung eines Brandherdes unmittelbar ein Wasseraustrag erfolgt. Die damit einhergehende Kühlwirkung bzw. Löschwirkung wirkt sich ebenfalls auf die Belastungssituation des Wasserstromventils bzw. des Wasserstromventilsystems aus, welches sich mitunter in Nähe der entsprechenden Wasseraustragseinrichtung befindet. Auch dieser Umstand findet in der in Rede stehenden Norm keine Berücksichtigung.

Im Ergebnis ist das zuvor skizzierte Prüfverfahren somit unzureichend bzw. mit Nachteilen behaftet, da die im Gebrauchszustand bzw. Einsatzzustand des Nassalarmventils vorherrschenden Bedingungen im Brandfall nur unzureichend abgebildet werden und insbesondere nicht zur Überprüfung der konstruktiven Anforderungen an nicht-metallischen Bauteilen geeignet ist.

In diesem Zusammenhang ist auch beachtlich, dass die wachsende Erschließung von Gewerbeflächen mit einer erhöhten Nachfrage an automatischen Feuerlöschanlagen verbunden ist, einhergehend mit einer hohen zu produzierenden Stückzahl hierzu erforderlicher Nassalarmventile bzw. Nassalarmventilstationen. In diesem Zusammenhang wird der Einsatz nicht-metallischer Bauteile, insbesondere von Kunststoffteilen, angestrebt, die aufgrund ihrer kostengünstigen und einfachen Ausgestaltung die wirtschaftliche Herstellung von Wasserstromventilen auch in hohen Stückzahlen ermöglichen.

Diesbezüglich schlagen sich die zuvor geschilderten Unzulänglichkeiten aufgrund der zuvor beschriebenen Norm in besonders signifikanter Weise nieder. Schließlich verhalten sich nicht-metallische bzw. einen niedrigen Schmelzpunkt von weniger als 800 °C aufweisende Bauteile gegenüber metallischen Bauteilen vergleichsweise empfindlich, sodass sich die Abweichungen gegenüber den Realbedingungen besonders stark niederschlagen.

Die US 2015/153252 A1 offenbart ein Brandbeanspruchungssystem für Sprinkler. Hierzu ist eine Raucherzeugungseinrichtung vorgesehen, die oberhalb einer Auffangvorrichtung für Wasser, gebildet aus Behältern, vorgesehen ist. Oberhalb der Raucherzeugungseinrichtung ist eine höhenverstellbare Platte mit Sprinklern vorgesehen.

Vor diesem technischen Hintergrund liegt daher der vorliegenden Erfindung die Aufgabe zugrunde, Systeme und Verfahren zur Durchführung von Brandbeanspruchungsprüfungen an Wasserstromventilen und/oder Wasserstromventilsystemen bereitzustellen, wobei die zuvor geschilderten Nachteile des Standes der Technik zumindest weitgehend vermieden oder aber wenigstens abgeschwächt werden sollen.

Insbesondere ist es eine Aufgabe der vorliegenden Erfindung, Systeme und Verfahren zur Durchführung von Brandbeanspruchungsprüfungen an Wasserstromventilen und/oder Wasserstromventilsystemen bereitzustellen, mit denen die bei einem tatsächlichen Brand vorherrschenden Realbedingungen möglichst deckungsgleich abgebildet werden.

Insbesondere zielt die vorliegende Erfindung auf die Bereitstellung eines Prüfkonzepts ab, das eine zuverlässige Brandbeanspruchungsprüfung von nicht-metallischen, insbesondere kunststoffbasierten, Bauteilen eines Wasserstromventils und/oder einer Wasserstromventilstation ermöglicht.

Die zuvor geschilderte Aufgabenstellung wird erfindungsgemäß durch eine Prüfanlage gemäß Patentanspruch 1, ein Prüfsystem gemäß Patentanspruch 5, ein Prüfverfahren gemäß Patentanspruch 9 sowie diesbezügliche Verwendungen gemäß den Patentansprüchen 13 und 14 gelöst. Vorteilhafte Weiterbildungen und Ausgestaltungen der jeweiligen Erfindungsaspekte sind Gegenstand der diesbezüglichen Unteransprüche.

Gegenstand der vorliegenden Erfindung ist somit - gemäß einem **ersten** Aspekt der vorliegenden Erfindung - eine Prüfanlage zur Durchführung einer Brandbeanspruchungsprüfung an einem Wasserstromventil und/oder an einem Wasserstromventilsystem, insbesondere an einem Nassalarmventil und/oder an einer Nassalarmventilstation.

Darüber hinaus betrifft die vorliegende Erfindung - gemäß einem **zweiten** Aspekt der vorliegenden Erfindung - ein Prüfsystem zur Durchführung einer Brandbeanspruchungsprüfung, wobei das Prüfsystem eine Prüfanlage und mindestens ein Wasserstromventil und/oder mindestens ein Wasserstromventilsystem, insbesondere ein Nassalarmventil und/oder eine Nassalarmventilstation, aufweist,
Gleichermaßen betrifft die vorliegende Erfindung - gemäß einem **dritten** Aspekt der vorliegenden Erfindung - ein Prüfverfahren zur Durchführung einer Brandbeanspruchungsprüfung an einem Wasserstromventil und/oder an einem Wasserstromventilsystem, vorzugsweise an einem Nassalarmventil und/oder an einer Nassalarmventilstation.

Überdies betrifft die vorliegende Erfindung - gemäß einem **vierten** Aspekt der vorliegenden Erfindung - die Verwendung einer Prüfanlage zur Durchführung einer Brandbeanspruchungsprüfung an einem Wasserstromventil und/oder an einem Wasserstromventilsystem, vorzugsweise an einem Nassalarmventil und/oder an einer Nassalarmventilstation.

Schließlich betrifft die vorliegende Erfindung - gemäß einem **fünften** Aspekt der vorliegenden Erfindung - die Verwendung eines Prüfsystems zur Durchführung einer Brandbeanspruchungsprüfung an einem Wasserstromventil und/oder an einem Wasserstromventilsystem, vorzugsweise an einem Nassalarmventil und/oder an einer Nassalarmventilstation.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist eine Prüfanlage zur Durchführung einer Brandbeanspruchungsprüfung an einem Wasserstromventil und/oder an einem Wasserstromventilsystem, insbesondere an einem Nassalarmventil und/oder an einer Nassalarmventilstation, wobei die Prüfanlage mindestens eine Zulaufleitung und mindestens eine Ablaufleitung aufweist, und
wobei die Prüfanlage mindestens ein Aufnahmemittel zur Aufnahme eines flüssigen Brennstoffs aufweist,
wobei das Aufnahmemittel wannen- oder kastenförmig ausgebildet ist,
wobei das Wasserstromventil in einem Prüfzustand zwischen einem Leitungsende der Zulaufleitung einerseits und einem Leitungsende der Ablaufleitung andererseits fluidisch anschließbar ist,
wobei die Leitungsenden derart ausgebildet und/oder ausgerichtet sind, dass das Wasserstromventil im Prüfzustand in einer vertikalen Einbaulage zwischen den Leitungsenden anschließbar ist,
wobei die Zulaufleitung und die Ablaufleitung zumindest im Wesentlichen vertikal ausgerichtet sind,
wobei die Prüfanlage an eine Wasserversorgungseinrichtung anschließbar ist oder eine Wasserversorgungseinrichtung aufweist, so dass das Wasserstromventil im Prüfzustand von einem Wasserstrom durchströmbar ist und
wobei das Aufnahmemittel mindestens einen rohrförmigen Führungsabschnitt aufweist, über welchen die Zulaufleitung, getrennt von dem Brennstoff, durch das Aufnahmemittel hindurchgeführt ist.

Unter dem Begriff "vertikale Einbaulage" ist insbesondere eine Ausrichtung des Wasserstromventils zu verstehen, die zumindest im Wesentlichen vertikal bzw. senkrecht zu einer Abstützfläche oder einem Boden, die bzw. der insbesondere zur Abstützung der Prüfanlage dient, verläuft. Diese vertikale Ausrichtung kann sich auf die Strömungsrichtung am Eintritt in das Wasserstromventil und/oder am Austritt aus dem Wasserstromventil und/oder innerhalb des Wasserstromventils beziehen. Alternativ oder zusätzlich kann sich die in Rede stehende vertikale Einbaulage bzw. Ausrichtung auch auf die Längserstreckung des Wasserstromventils, insbesondere des Gehäuses des Wasserstromventils, beziehen.

Es versteht sich, dass die vertikale Ausrichtung als praxisbezogener Wert zu verstehen ist. Insofern ist dieser Wert toleranzbehaftet, wobei Abweichungen gegenüber der exakten Lotrichtung von vorzugsweise höchstens 15°, besonders bevorzugt höchstens 10°, insbesondere höchstens 5°, vorliegen können.

Die grundlegende Idee der vorliegenden Erfindung ist somit in der vertikalen Ausrichtung des in der Prüfanlage verbauten Wasserstromventils zu sehen, wodurch die tatsächliche Ausrichtung des Wasserstromventils im Einsatzzustand bzw. im Realbetrieb entsprechend abgebildet wird, da auch hier eine vertikale Einbaulage vorgesehen ist.

Darüber hinaus ist die vertikale Ausrichtung des Wasserstromventils mit dem Vorteil verbunden, dass das Wasserstromventil - in einem geschlossenen Zustand - aufgrund des Eigengewichts eines Ventilelements des Wasserstromventils und/oder einer auf das Ventilelement wirkenden Wassersäule sicher verschlossen ist. Dadurch kann eine zuverlässige Brandbeanspruchungsprüfung bei einem verschlossenen Wasserstromventil erfolgen, wobei die Rohrleitungen im Bereich des Wasserstromventils vollständig mit Wasser angestaut sind, wie es auch im Realbetrieb der Fall ist.

Die erfindungsgemäße Prüfanlage ist an eine Wasserversorgungseinrichtung anschließbar oder weist eine Wasserversorgungsleitung auf, so dass das Wasserstromventil im Prüfzustand und, insbesondere, in einem geöffneten Zustand von einem Wasserstrom durchströmbar ist.

Die Formulierung "durchströmbar", wie sie im Rahmen der vorliegenden Erfindung verwendet wird, bezeichnet insbesondere einen geöffneten Zustand des Wasserstromventils, bei dem ein Fluideintritt des Nassalarmventils einerseits und ein Fluidaustritt des Nassalarmventils andererseits fluidleitend miteinander kommunizieren, wobei ein kontinuierlicher oder diskontinuierlicher Wasserstrom über den Fluideintritt in das Nassalarmventil eintritt und über den Fluidaustritt aus dem Nassalarmventil wieder austritt. Dadurch findet eine Durchströmung des Wasserstromventils statt, insbesondere wobei sich das Ventilelement in einer geöffneten bzw. abgehobenen Stellung befindet.

Der Grundgedanke dieses Erfindungsaspekts ist somit darin zu sehen, dass die im Realbetrieb mit dem Hindurchströmen des Wassers durch das Nassalarmventil verbundene Kühlwirkung berücksichtigt wird. Auch dadurch werden die im Brandfall vorherrschenden Realbedingungen entsprechend nachgebildet, wodurch eine praxisgerechte Brandbeanspruchungsprüfung ermöglicht wird.

Es ist anzumerken, dass die erfindungsgemäße Lehre nicht nur auf die Brandbeanspruchungsprüfung des Wasserstromventils selbst abzielt, sondern sämtliche Komponenten bzw. Bauteile umfasst, welche das Wasserstromventilsystem ausbilden. Dabei wird das Wasserstromventil insbesondere unmittelbar an die Prüfanlage angeschlossen, wobei die weiteren Komponenten bzw. Bauteile der Wasserstromventilstation an dem Wasserstromventil angeordnet und daher ebenfalls - also mittelbar - mit der Prüfanlage in Verbindung stehen.

Die Zulaufleitung und die Ablaufleitung sind zumindest im Wesentlichen vertikal ausgerichtet.

Insofern bilden die Zulaufleitung, das Wasserstromventil bzw. dessen Gehäuse sowie die Ablaufleitung eine sich im Wesentlichen vertikal erstreckende bzw. eine gemeinsame Längserstreckungsrichtung aufweisende Leitungsanordnung. Dies gestattet einen kompakten Aufbau und ist weiterführend an die Anordnung angelehnt, die sich auch unter realen Bedingungen eines in einer Feuerlöschanlage verbauten Wasserstromventils wiederfindet.

Was die Ausbildung der Zulaufleitung und/oder der Ablaufleitung anbelangt, so sind diese in Längsrichtung verstärkt ausgebildet. Dadurch wird das zwischen den Leitungsenden aufgenommene Wasserstromventil lagefest bzw. gesichert zwischen den Leitungsenden der Zulaufleitung und der Ablaufleitung gehalten.

Gemäß einer bevorzugten Ausgestaltung der Prüfanlage ist vorgesehen, dass die Zulaufleitung und/oder die Ablaufleitung als Rohrleitung bzw. Rohrleitungen ausgebildet ist bzw. sind. Da in herkömmlichen Feuerlöschanlagen ebenfalls maßgeblich Rohrleitungen zum Einsatz kommen, wird durch eine solche Ausbildung eine weiterführende Annäherung an die in der Feuerlöschanlage vorherrschenden Realbedingungen ermöglicht.

Bevorzugt ist bzw. sind die Zulaufleitung und/oder die Ablaufleitung aus einem hitze- und/oder feuerbeständigen Material, insbesondere einem Metall- oder Kunststoffmaterial, hergestellt. Die feuer- bzw. hitzebeständige Ausbildung ist insbesondere insofern vorteilhaft, als dass im Rahmen der Brandbeanspruchungsprüfung ein Brennmittel entzündet wird, infolgedessen das Wasserstromventil sowie die mit dem Wasserstromventil verbundenen Leitungen ebenfalls einer Hitzeeinwirkung ausgesetzt werden. Zumindest müssen die Materialien der Zulaufleitung bzw. der Ablaufleitung über den Zeitraum der Prüfdauer von vorzugsweise mindestens 10 Minuten, insbesondere mindestens 15 Minuten, im Wesentlichen hitzebeständig, insbesondere gegenüber einer Temperatur von mindestens 800 °C, sein.

Gemäß einer weiteren und bevorzugten Ausführungsform ist mindestens eines der Leitungsenden flanschartig ausgebildet. Dies gestattet eine sichere, insbesondere dichtende, Anbindung des Wasserstromventils an die Prüfanlage. Besonders bevorzugt sind in der Prüfanlage sämtliche Verbindungselemente, die zur Verbindung von insbesondere wasserführenden Leitungsenden vorgesehen sind, flanschartig ausgebildet.

Besonders bevorzugt ist mindestens eines der Leitungsenden austauschbar und/oder in seiner Größe variierbar, um Wasserstromventile verschiedener Größe, insbesondere mit verschiedenen Nenndurchmessern, anzuschließen.

Das Aufnahmemittel ist als wannen- oder kastenförmiger Behälter ausgebildet. Dabei weist das Aufnahmemittel ein Fassungsvolumen von mindestens 50 Litern, vorzugsweise mindestens 100 Litern, besonders bevorzugt von mindestens 150 Litern, auf. Bezüglich weitergehender Anforderungen an Brennstoffwannen darf auf die US-Norm FM 5130 verwiesen werden. Insbesondere ist das Aufnahmemittel aus Stahl, besonders bevorzugt aus S235 JP, hergestellt.

Darüber hinaus weist das Aufnahmemittel vorzugsweise mindestens einen insbesondere stutzenartigen Abfluss zum Abführen einer Flüssigkeit, insbesondere von Löschwasser, aus dem Inneren bzw. dem Aufnahmevolumen des Aufnahmemittels auf. Der Abfluss ist insbesondere stutzenartig ausgebildet. Durch den Einsatz des Abflusses wird ein Überschwemmen des Aufnahmemittels infolge des auf das Aufnahmemittel abgegebenen Löschwassers verhindert.

Für diese bevorzugte Ausführungsform ist insbesondere vorgesehen, dass am Abfluss eine vorzugsweise rohr-, insbesondere siphonartige, Abflussleitung anschließbar ist. Dies gestattet eine definierte Abführung der Flüssigkeit aus dem Aufnahmemittel und erleichtert somit den Prüfbetrieb und verhindert ein Aufschwemmen des flüssigen Brennstoffs.

Das Aufnahmemittel weist mindestens einen rohrartigen Führungsabschnitt auf, über den die Zulaufleitung von dem Brennmittel getrennt durch das Aufnahmemittel hindurchgeführt ist. Dabei ist die Zulaufleitung durch den Führungsabschnitt hindurchgeführt, wodurch die Zulaufleitung von dem im Inneren des Aufnahmemittels vorhandenen Brennmittel getrennt zum Wasserstromventil hingeleitet werden kann. Besonders bevorzugt fungiert der Führungsabschnitt zusätzlich als Isolationsmittel, so dass sich die Hitze eines im Aufnahmemittel entzündeten Brennmittels allenfalls abgeschwächt auf das in der Zulaufleitung strömende Fluid überträgt.

Gemäß einer weiteren und besonders bevorzugten Ausführungsform weist das Aufnahmemittel vorzugsweise an seinen Eckbereichen angeordnete Abstützfüße auf, über die das Aufnahmemittel vorzugsweise höhenverstellbar auf der Abstützfläche bzw. auf dem Boden abgestützt ist.

Darüber hinaus wird ein Wasserstromventil, insbesondere ein Nassalarmventil, mit mindestens einem Zulaufanschluss zum Anschluss an ein Leitungsende einer Zulaufleitung und mit mindestens einem Ablaufanschluss zum Anschluss an ein Leitungsende einer Ablaufleitung, wobei das Wasserstromventil mindestens eine automatische Wasseraustragseinrichtung aufweist, beschrieben.

Unter dem Begriff "automatische Wasseraustragseinrichtung" ist im Sinne der vorliegenden Erfindung insbesondere eine technische Einrichtung zu verstehen, die dazu ausgebildet, im Brandfall nach Überschreiten einer bestimmten Auslösetemperatur automatisch bzw. selbstständig den Wasseraustrag, insbesondere über eine Düse oder einen Sprinkler, zu initiieren.

Der Grundgedanke liegt somit darin, das Wasseralarmventil als solches bereits mit einer automatischen Wasseraustragseinrichtung auszurüsten. Aufgrund dieser Ausgestaltung eignet sich das Wasserstromventil besonders zum Einsatz in einer Prüfanlage zur Durchführung einer Brandbeanspruchungsprüfung, da in besonders einfacher bzw. kompakter Bauweise eine Prüfung unter Berücksichtigung der Löschwirkung durch die Wasseraustragseinrichtung realisiert werden kann. Diesbezüglich ist vorgesehen, die Wasseraustragseinrichtung fluidisch mit einem Ventilgehäuse des Wasserstromventils zu koppeln, um nach der Aktivierung der Wasseraustragseinrichtung ein Nachspeisen von Wasser zur Wasseraustragseinrichtung sicherzustellen.

Besonders bevorzugt ist die Wasseraustragseinrichtung als Sprinkler ausgebildet. Auf Sprinkler wird besonders häufig in automatischen Feuerlöschanlagen zurückgegriffen. Derartige Sprinkler weisen üblicherweise Sprinklerköpfe auf, die mit Glasampullen verschlossen sind, welche mit einer gefärbten Spezialflüssigkeit gefüllt sind, die ihrerseits eine Luftblase enthält. Innerhalb des Sprinklersystems, das in diesem Fall die übergeordnete Feuerlöschanlage bildet, herrscht ein konstanter Wasserdruck, der in einer Sprinklerzentrale kontrolliert werden kann.

Bei einem Feuer erwärmt sich die Flüssigkeit in den Glasampullen und dehnt sich aus. Dadurch platzen die Ampullen, sodass die Düsen geöffnet werden und Wasser aus dem Sprinklerrohrnetz austritt. Bei einem Brand öffnen somit nur die Sprinkler, deren Ampullen die Auslösetemperatur erreicht haben.

Die Auslösetemperatur hängt von der Größe der eingeschlossenen Luftblase ab und wird über die Farbe der Ampullenflüssigkeit gekennzeichnet. Im Durchschnitt liegt die Auslösetemperatur ca. 30 °C über der zu erwartenden Raumtemperatur.

Das Öffnen des Sprinklers bzw. der automatischen Wasseraustragseinrichtung geht mit einem Druckabfall einher. Dieser Druckabfall initiiert vorzugsweise ein zumindest im Wesentlichen selbstständiges Öffnen des Wasserstromventils bzw. des Nassalarmventils. Insbesondere hebt sich das Ventilelement aufgrund des Druckabfalls vom Ventilsitz ab, wodurch der weitere Wasserfluss durch das Wasserstromventil hindurch ermöglicht wird. Ab diesem Zeitpunkt wird Wasser aus dafür vorgesehenen Tanks oder über einen dafür dimensionierten Wasseranschluss mit hohem Druck in das Sprinklersystem bzw. in die Prüfanlage gepumpt und dadurch zur Wasserversorgungseinrichtung nachgespeist. Dieses tritt an allen offenen Wasserdüsen bzw. Wasseraustragseinrichtung aus und löscht oder minimiert den Brand.

Das Wasserstromventil ist dazu ausgebildet, den Wasserfluss in ein elektrisches Signal umzuwandeln und an mindestens eine Alarmeinrichtung zu übermitteln, um ein entsprechendes Alarmsignal auszugeben. Dadurch kann auch eine Überprüfung der Alarmfunktion im Brandfall erfolgen, wobei die mindestens eine Alarmeinrichtung ebenfalls Teil des erfindungsgemäßen Wasserstromventils oder des übergeordneten Wasserstromventilsystems sein kann.

Überdies ist es vorzugsweise möglich, aufgrund der Umwandlung des Wasserflusses in das elektrische Signal den Auslöseort des Sprinklers bzw. der Wasseraustragseinrichtung zu ermitteln.

Besonders bevorzugt weist das Wasserstromventil mindestens einen Temperatursensor auf, um im Rahmen der Brandbeanspruchungsprüfung die sich einstellende Temperaturentwicklung zu ermitteln. Prinzipiell kann der Temperatursensor an beliebiger Stelle am Wasserstromventil angeordnet bzw. befestigt werden. Insbesondere eignen sich Teile des Gehäuses zur Anordnung des Temperatursensors, um die außenseitig am Wasserstromventil herrschende Temperatur zu erfassen. Alternativ oder zusätzlich ist jedoch auch eine Anordnung im Inneren bzw. im Gehäuse des Wasserstromventils sinnvoll, um die Temperatur zu ermitteln, denen die im Inneren des Wasserstromventils angeordneten Bauteile ausgesetzt sind. Besonders bevorzugt kann mindestens ein Temperatursensor dazu ausgelegt sein, die Temperatur der Wasserströmung im Rahmen der Brandbeanspruchungsprüfung zu erfassen.

Im Ergebnis ist das Wasserstromventil somit zum gezielten Einsatz im Rahmen einer Brandbeanspruchungsprüfung konzipiert, wobei in kompakter Weise eine automatisch initiierte Löschwirkung simuliert werden kann.

Weiterer Gegenstand der vorliegenden Erfindung - gemäß einem **zweiten** Aspekt der vorliegenden Erfindung - ist ein Prüfsystem zur Durchführung einer Brandbeanspruchungsprüfung, wobei das Prüfsystem eine Prüfanlage und mindestens ein Wasserstromventil und/oder mindestens ein Wasserstromventilsystem, insbesondere ein Nassalarmventil und/oder eine Nassalarmventilstation, aufweist, wobei die Prüfanlage mindestens eine Zulaufleitung, mindestens eine Ablaufleitung und mindestens ein Aufnahmemittel zur Aufnahme eines vorzugsweise flüssigen Brennstoffs aufweist, wobei das Wasserstromventil in einem Prüfzustand oberhalb des Aufnahmemittels zwischen einem Leitungsende der Zulaufleitung einerseits und einem Leitungsende der Ablaufleitung andererseits flüssigkeitsleitend angeschlossen ist, wobei dieses erfindungsgemäße Prüfsystem die erfindungsgemäße Prüfanlage aufweist. Auf diese Weise lassen sich die zuvor geschilderten Vorteile entsprechend realisieren.

Somit ermöglicht die erfindungsgemäße Prüfanlage eine Abbildung der Realbedingungen eines in einer Feuerlöschanlage verbauten Wasserstromventils im Einsatzzustand, wobei die erfindungsgemäße Ausbildung des Wasserstromventils in kompakter Weise die Löschwirkung einer automatischen Wasserabgabeeinrichtung nachbildet.

Was die Ausbildung des Wasserstromventils als Bauteil des erfindungsgemäßen Prüfsystems anbelangt, so ist insbesondere vorgesehen, dass die zuvor geschilderte Wasseraustragseinrichtung an einer dem Aufnahmemittel zugewandten Seite an dem Wasserstromventil angeordnet und/oder befestigt ist. Dadurch kann eine Wassereinwirkung auf die unmittelbar unterhalb des Wasserstromventils angeordnete Aufnahmeeinrichtung für das Brennmittel sichergestellt und eine besonders effektive Löschwirkung simuliert werden. Diesbezüglich ist anzumerken, dass auch bei dieser besonders bevorzugten Ausbildung weiterhin die Überprüfung der Alarmfunktion möglich ist, beispielsweise indem die Alarmeinrichtung ebenfalls am Wasserstromventil angeordnet wird. Dann wird beim Auslösen der Wasseraustragseinrichtung bzw. des Sprinklers der Wasserstrom in ein elektrisches Signal umgewandelt und die Alarmeinrichtung durch Übertragung des elektrischen Signals entsprechend aktiviert.

Wiederum weiterer Gegenstand der vorliegenden Erfindung - gemäß einem **dritten** Aspekt der vorliegenden Erfindung - ist ein Prüfverfahren zur Durchführung einer Brandbeanspruchungsprüfung an einem Wasserstromventil und/oder an einem Wasserstromventilsystem, vorzugsweise an einem Nassalarmventil und/oder an einer Nassalarmventilstation, unter Verwendung der erfindungsgemäßen Prüfanlage,
wobei folgende Verfahrensschritte durchgeführt werden,
(a) Bereitstellen der Prüfanlage, die mindestens die Zulaufleitung und mindestens die Ablaufleitung aufweist,
(b) Anschließen des Wasserstromventils an ein Leitungsende der Zulaufleitung einerseits und an ein Leitungsende der Ablaufleitung andererseits,
(c) Entzünden eines Brandmittels, um eine Hitzeeiwirkung auf das Wasserstromventil zu simulieren.

Dabei ist erfindungsgemäß vorgesehen, dass das Wasserstromventil im Schritt (b) in einer vertikalen Einbaulage zwischen den Leitungsenden der Zulaufleitung einerseits und der Ablaufleitung andererseits angeschlossen wird und das Wasserstromventil während der Hitzeeinwirkung von einem Wasserstrom durchströmt wird.

Auf diese Weise lassen sich die bereits geschilderten Vorteile realisieren, die insbesondere in einer verbesserten Abbildung der Einbaulage eines in der Feuerlöschanlage verbauten Wasserstromventils liegen, einhergehend mit einer praxisgerechten Brandbeanspruchungsprüfung.

Mit anderen Worten wird erfindungsgemäß derart verfahren, dass sich über einen gewissen Zeitabschnitt die Durchströmung des Wasserstromventils durch den Wasserstrom einerseits und die Hitzeeinwirkung infolge des brennenden Brennmittels andererseits überlagern.

Aufgrund der vertikalen Ausrichtung des Wasserstromventils und der mit dem Wasserstrom verbundenen Kühlung eignet sich das erfindungsgemäße Prüfverfahren insbesondere zur realgetreuen Untersuchung von Materialien, die einen vergleichsweise niedrigen Schmelzpunkt, beispielsweise unter 800 °C, aufweisen.

Besonders bevorzugt wird das Wasserstromventil während der Hitzeeinwirkung kontinuierlich von dem Wasserstrom durchströmt. Hierzu wird die Prüfanlage, insbesondere vor dem Entzünden des Brandmittels, an eine Wasserversorgungseinrichtung oder ein sonstiges Wasserreservoir angeschlossen, um die kontinuierliche Zuführung eines Wasserstroms zu realisieren. Durch diese Maßnahme werden die im Brandfall tatsächlich vorherrschenden Realbedingungen weiterführend verbessert abgebildet, insbesondere wobei die durch den Wasserstrom auf das Wasserstromventil eintretende Kühlwirkung in realistischer Weise abgebildet wird.

Besonders bevorzugt erfolgt die Prüfung automatisch, dahingehend, dass eine vorzugsweise an einem Wasserstromventil angeordnete Wasseraustragseinrichtung automatisch ausgelöst wird. Dadurch erfolgt die Aktivierung des Wasserstroms durch das Wasserstromventil hindurch.

Diesbezüglich kann insbesondere vorgesehen sein, dass eine Umwandlung des Wasserstroms in ein elektrisches Signal erfolgt. Das elektrische Signal wird wiederum dazu verwendet, eine Alarmeinrichtung zu aktivieren bzw. ein Alarmsignal auszugeben. Insofern eignet sich das erfindungsgemäße Verfahren besonders bevorzugt auch zur Überprüfung der Alarmfunktion einer mit dem Wasserstromventil verbundenen bzw. verbindbaren Alarmeinrichtung.

Gemäß einer besonders bevorzugten Verfahrensführung erfolgt eine insbesondere kontinuierliche Temperaturüberwachung in und/oder am Wasserstromventil. Hierzu wird während der Hitzeeinwirkung der Temperaturverlauf an und/oder im Wasserstromventil über Temperatursensoren, vorzugsweise über Thermoelemente, aufgezeichnet.

Gleichermaßen weiterer Gegenstand der vorliegenden Erfindung - gemäß einem **vierten** Aspekt der vorliegenden Erfindung - ist die Verwendung der erfindungsgemäßen Prüfanlage zur Durchführung einer Brandbeanspruchungsprüfung an einem Wasserstromventil und/oder an einem Wasserstromventilsystem, vorzugsweise an einem Nassalarmventil und/oder an einer Nassalarmventilstation.

Schließlich betrifft die vorliegende Erfindung - gemäß einem **fünften** Aspekt der vorliegenden Erfindung - die Verwendung des erfindungsgemäßen Prüfsystems zur Durchführung einer Brandbeständigkeitsprüfung an einem Wasserstromventil und/oder an einem Wasserstromventilsystem, vorzugsweise an einem Nassalarmventil und/oder an einer Nassalarmventilstation.

Mit den erfindungsgemäßen Verwendungen lassen sich die vorgenannten Vorteile, wie sie in Bezug auf die einzelnen erfindungsgemäßen Komponenten bzw. Systeme bereits angeführt worden sind, in entsprechender Weise realisieren.

Im Folgenden werden bevorzugte Ausführungsformen der Erfindung anhand der Zeichnung bzw. Figurendarstellungen näher erläutert. Im Zusammenhang mit der Erfindung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung aufgezeigt.

In den Figurendarstellungen zeigt:
- Fig. 1: eine perspektivische Darstellung eines erfindungsgemäßen Prüfsystems, bestehend aus einer erfindungsgemäßen Prüfanlage und einem Wasserstromventil, zur Durchführung einer Brandbeanspruchungsprüfung an einem Wasserstromventil und/oder an einem Wasserstromventilsystem, insbesondere an einem Nassalarmventil und/oder an einer Nassalarmventilstation;
- Fig. 2: eine Draufsicht eines Aufnahmemittels der erfindungsgemäßen Prüfanlage zur Aufnahme eines vorzugsweise flüssigen Brennstoffs;
- Fig. 3: einen schematischen Schnitt des in Fig. 2 dargestellten Aufnahmemittels;
- Fig. 4: eine schematische Seitenansicht der erfindungsgemäßen Prüfanlage im Anschlussbereich einer Wasserversorgungsleitung zu einer Zulaufleitung;
- Fig. 5: eine Seitenansicht des Wasserstromventils; und
- Fig. 6: eine weitere Seitenansicht des Wasserstromventils.

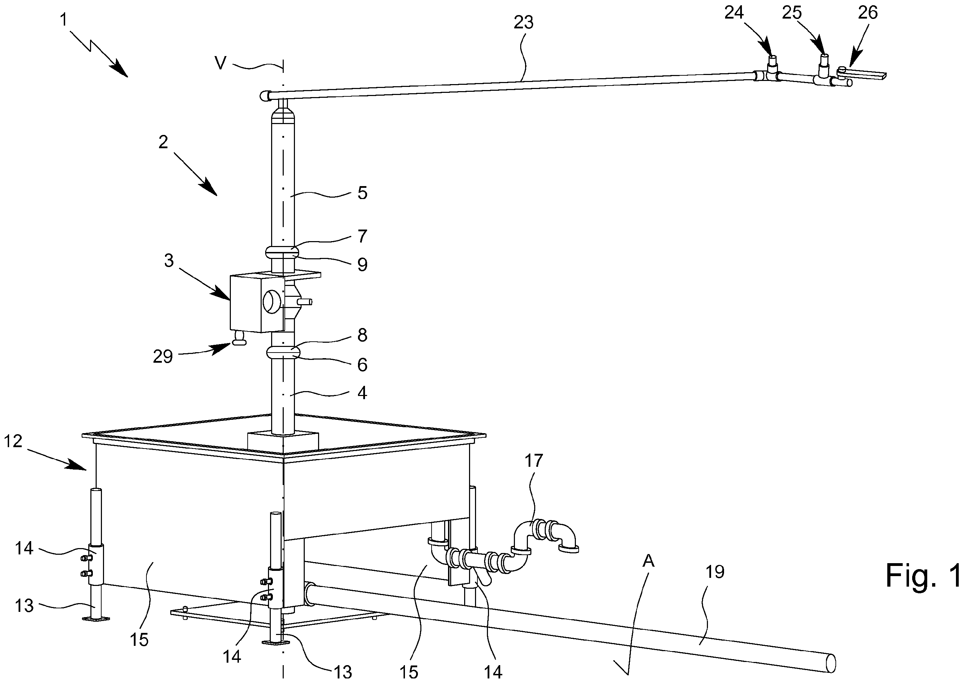

Figur 1 schematisiert eine perspektivische Darstellung eines erfindungsgemäßen Prüfsystems 1. Das Prüfsystem 1 umfasst als Kernstück eine erfindungsgemäße Prüfanlage 2 und als Prüfling ein Wasserstromventil 3.

Bei dem Wasserstromventil 3 handelt es sich insbesondere um ein Nassalarmventil, das einen Teil einer übergeordneten (nicht dargestellten) Nassalarmventilstation bildet.

Das Prüfsystem 1 ist somit als Gesamtsystem bzw. übergeordnete Anordnung zu verstehen, das neben der Prüfanlage 2 auch das an der Prüfanlage 2 angeschlossene Wasserstromventil 3 aufweist.

Demgegenüber bildet die Prüfanlage 2 als Kernstück des Prüfsystems 1 eine Baueinheit, an die das zu prüfende Wasserstromventil 3 anschließbar ist. Auf die Anbindung des Wasserstromventils 3 an die Prüfanlage 2 wird nachfolgend noch im Detail eingegangen.

Es ist anzumerken, dass die vorliegende Erfindung sowohl auf die Brandbeanspruchungsprüfung des Wasserstromventils 3 als auch auf die Brandbeanspruchungsprüfung eines Wasserstromventilsystems bzw. einer übergeordneten Nassalarmventilstation abzielt. Insofern können mit der erfindungsgemäßen Prüfanlage 2 bzw. mit dem erfindungsgemäßen Prüfsystem 1 zusätzlich zu dem Wasserstromventil 3 auch sämtliche weitere, die Nassalarmstation bildende Einheiten bzw. Bauteile, einer Brandbeanspruchungsprüfung unterzogen werden.

Das Prüfsystem 1 und/oder die Prüfanlage 2 ist bzw. sind zur Durchführung einer Brandbeanspruchungsprüfung an dem Wasserstromventil 3 ausgebildet, wobei ein besonderes Augenmerk auf die Brandbeanspruchungsprüfung an nicht-metallischen und/oder einen niedrigen Schmelzpunkt aufweisenden Bauteilen und/oder Abschnitten des Wasserstromventils 3 und/oder des Wasserstromventilsystems liegt. Bauteile mit einem "niedrigen Schmelzpunkt" weisen insbesondere einen Schmelzpunkt von weniger als 800° C, vorzugsweise weniger als 700° C, besonders bevorzugt weniger als 600° C, auf.

Prinzipiell kann jedes Bauteil des Wasserstromventils 3 nicht metallisch ausgebildet sein und/oder einen niedrigen Schmelzpunkt aufweisen. Insbesondere sind die nicht-metallischen Bauteile und/oder einen niedrigen Schmelzpunkt aufweisenden Bauteile derart angeordnet, dass sie in einem Betriebs- bzw. Prüfzustand von einem Wasserstrom durch- und/oder umströmt werden. Dies gestattet die Brandbeanspruchungsprüfung unter Berücksichtigung eines während der Brandbeanspruchung auf die in Rede stehenden Bauteile einwirkenden Wasserstroms und insbesondere der damit verbundenen Kühlwirkung.

Wie aus der Fig. 1 ersichtlich, ist das Prüfsystem 1 bzw. die Prüfanlage 2 auf einer Abstützfläche A, insbesondere einem Boden, aufgebaut bzw. abgestützt.

Zur Anbindung des Wasserstromventils 3 weist die Prüfanlage 2 mindestens eine Zulaufleitung 4 und mindestens eine Ablaufleitung 5 auf. Dabei ist das Wasserstromventil 3 zwischen einem Leitungsende 6 der Zulaufleitung 4 einerseits und einem Leitungsende 7 der Ablaufleitung 5 andererseits fluidisch angeschlossen bzw. anschließbar.

Beim dargestellten Ausführungsbeispiel ist an jedem Leitungsende 6, 7 ein Anschlusselement, insbesondere ein Flansch, vorgesehen, welches mit korrespondierenden, vorzugsweise ebenfalls flanschartigen, Anschlusselementen 8, 9 des Wasserstromventils 3 zur Ausbildung der fluidischen Verbindung verbindbar ist.

Erfindungswesentlich ist, dass die Leitungsenden 6, 7 derart angeordnet und/oder ausgerichtet sind, dass sich das Wasserstromventil 2 in dem in Fig. 1 dargestellten Prüfzustand in einer vertikalen Einbaulage befindet.

Als Referenz für die vertikale Einbaulage dient eine schematisch angedeutete Gerade bzw. Vertikale V, die im Wesentlichen senkrecht zur insbesondere ebenen Abstützfläche A, auf der die Prüfanlage 2 bzw. das Prüfsystem 1 abgestützt ist, verläuft. Bei der Abstützfläche A handelt es sich insbesondere um den Boden eines Prüf- bzw. Laborraums.

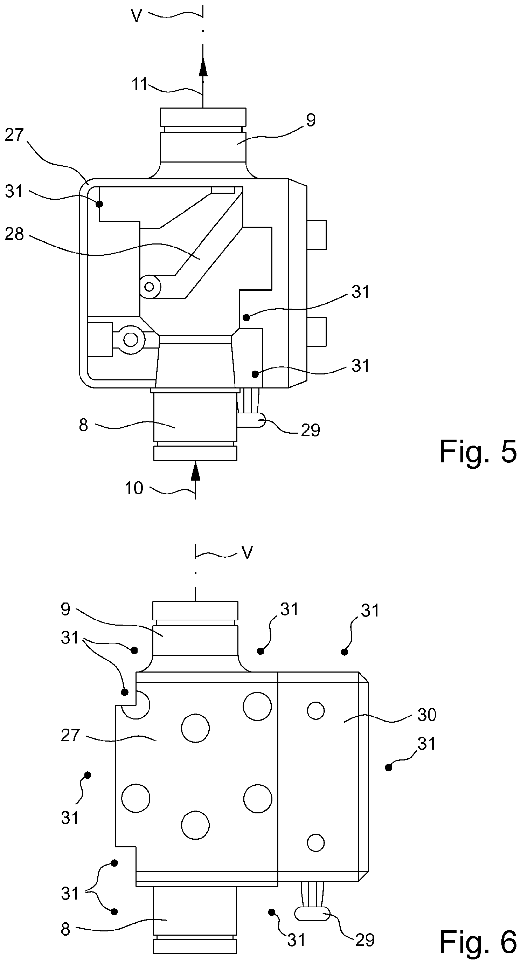

Wie insbesondere aus Fig. 5 ersichtlich, verläuft im Prüfzustand ein in das Wasserstromventil 3 einlaufender Zulaufstrom 10 und/oder ein aus dem Wasserstromventil 3 austretender Ablaufstrom 11 zumindest im Wesentlichen ebenfalls vertikal bzw. in Richtung der Vertikalen V.

Sofern das Wasserstromventil 3 eine gewisse Längserstreckung, also eine höhere Länge als Breite, aufweist, verläuft die diesbezügliche Längserstreckungsrichtung, bzw. Längserstreckungsachse ebenfalls in Lotrichtung bzw. parallel zu der vertikalen V, um die erfindungsgemäß vorgesehene vertikale Einbaulage zu realisieren.

Beim Darstellungsbeispiel sind sowohl die Zulaufleitung 4 als auch die Ablaufleitung 5 vertikal ausgerichtet. Dadurch ergibt sich eine im Wesentlichen vertikale Erstreckung der Zulaufleitung 4, des Wasserstromventils 3 sowie der Ablaufleitung 5 entlang der Vertikalen V, wie insbesondere aus Fig. 1 ersichtlich ist.

Die Realisierung der Wasserversorgung des Wasserstromventils 3 erfolgt erfindungsgemäß über eine (nicht dargestellte) Wasserversorgungseinrichtung. Diese Wasserversorgungseinrichtung kann durch einen Wassertank gebildet sein, mittels dem die Prüfanlage 2 mit Wasser versorgt wird. Alternativ oder zusätzlich kann die Prüfanlage 2 auch direkt an ein Wasserversorgungsnetz angeschlossen werden.

Die Zulaufleitung 4 und/oder die Ablaufleitung 5 sind vorzugsweise starr bzw. biegesteif und/oder in sonstiger Weise in Längsrichtung verstärkt ausgebildet. Dies gestattet eine sichere bzw. lagefixierte Anbindung des Wasserstromventils 3 an die Prüfanlage 2.

Beim Darstellungsbeispiel sind die Zulaufleitung 4 und die Ablaufleitung 5 als Rohrleitungen ausgebildet. Die Rohrleitungen können dabei vorzugsweise aus einem metallischen oder einem sonstigen feuer- bzw. hitzebeständigen Material bestehen. Insbesondere ist das Material der Zulaufleitung 4 und/oder der Ablaufleitung 5 zumindest beständig gegenüber den im Rahmen der Brandbeanspruchung auftretenden Temperaturen, die vorzugsweise im Bereich von 800° C liegen.

Die Prüfanlage 2 weist darüber hinaus mindestens ein Aufnahmemittel 12 zur Aufnahme eines (nicht dargestellten) Brennmittels bzw. Brandstoffs auf. Beim dargestellten Ausführungsbeispiel ist das vorzugsweise aus einem Metallmaterial bestehende Aufnahmemittel 12 wannen- bzw. kastenförmig ausgebildet.

Das Aufnahmemittel 12 weist beim Darstellungsbeispiel Abstützfüße 13 auf, über die das Aufnahmemittel 12 auf der Abstützfläche A abgestützt ist. Insbesondere sind die Abstützfüße 13 an den Eckbereichen des Aufnahmemittels 12 angeordnet und/oder befestigt.

Zur Anbindung der Abstützfüße 13 an das Aufnahmemittel 12 sind vorzugsweise ebenfalls an den Eckbereichen angeordnete Aufnahmehülsen 14 vorgesehen, in denen die Abstützfüße 13 einführbar sind. Dadurch können die Abstützfüße 13 wahlweise gegenüber den Aufnahmehülsen 14 verstellt werden, um eine Höhenverstellung des Aufnahmemittels 12 relativ zur Abstützfläche A zu realisieren. Die Abstützfüße sind über lösbare Befestigungsmittel, beispielsweise Schrauben, an den Aufnahmehülsen 14 befestigt.

Im eingebauten Zustand bzw. im Prüfzustand befindet sich das Wasserstromventil 3 oberhalb des Aufnahmemittels 12. Dabei ist die Zulaufleitung 4, insbesondere mittig, durch das Aufnahmemittel 12 hindurchgeführt.

Zudem weist das Aufnahmemittel 12 mindestens zwei gegenüberliegende Verlängerungsbleche 15 auf, die sich ausgehend von einer Unterseite bzw. eines Bodens des Aufnahmemittels 12 nach unten bzw. in Richtung zur Auflagefläche A hin erstrecken.

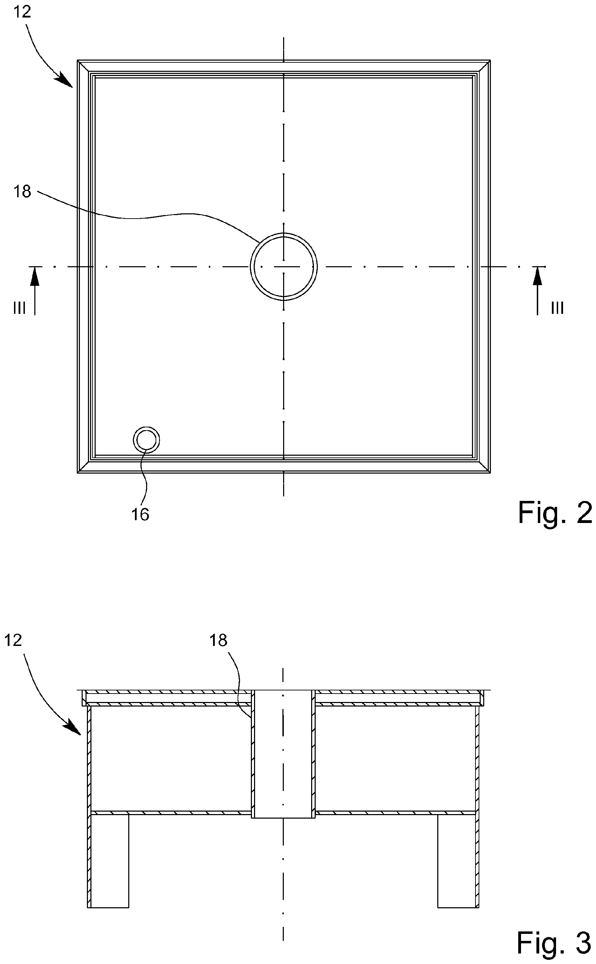

Wie nunmehr aus Fig. 2 hervorgeht, weist das Aufnahmemittel 12 einen Ablauf 16 auf. Der Ablauf 16 ist dabei bodenseitig bzw. unterseitig an dem Aufnahmemittel 12 angeordnet.

Dabei ist der Ablauf 16 insbesondere stutzenartig und/oder einstückig mit dem Aufnahmemittel 12 ausgebildet.

Der Ablauf 16 gestattet insbesondere den Anschluss einer Ablaufeinrichtung 17, insbesondere eines Siphons, um den definierten Ablauf von Flüssigkeit aus dem Ablaufmittel 12 zu ermöglichen. Die Ablaufeinrichtung 17 ist in Fig. 1 entsprechend dargestellt.

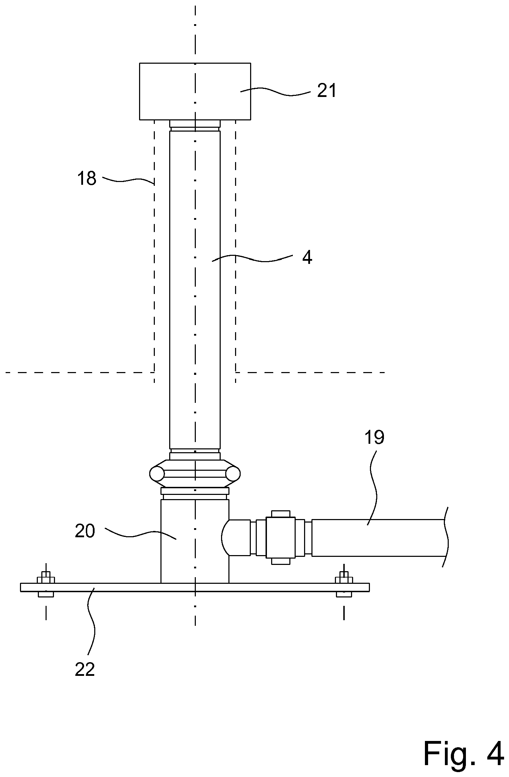

Am Aufnahmemittel 12 ist ein rohrförmiger Führungsabschnitt 18 vorgesehen, durch den die Zulaufleitung 4 durch das Aufnahmemittel 12 hindurchgeführt ist, wie insbesondere in Fig. 4 ersichtlich. Der Führungsabschnitt 18 kann einstückig an das Aufnahmemittel 12 angeformt sein oder ein separates Bauteil bilden.

Um die Zulaufleitung 4 gegenüber dem Aufnahmeraum des Aufnahmemittels 12 thermisch zu isolieren, ist der Nenndurchmesser des Führungsabschnitts 18 gegenüber dem Nenndurchmesser der Zulaufleitung 4 entsprechend vergrößert. Insbesondere beträgt der Nenndurchmesser des Führungsabschnitts 18 mindestens 120 %, vorzugsweise mindestens 130 %, besonders bevorzugt mindestens 150 %, des Nenndurchmessers der Zulaufleitung 4.

Zur Wasserversorgung der Prüfanlage 2 im Rahmen der Brandbeanspruchungsprüfung ist eine Wasserversorgungsleitung 19 vorgesehen. Die Wasserversorgungsleitung 19 ist vorzugsweise als Rohrleitung ausgebildet und/oder besteht aus einem metallischen oder einem sonstigen wärme- bzw. hitzebeständigen Material.

Die Wasserversorgungsleistung 19 ist fluidisch an die Zulaufleitung 4 angeschlossen. Die Wasserversorgungsleitung 19 verläuft dabei im Wesentlichen horizontal.

Insbesondere verläuft die Wasserversorgungsleitung 19 unterhalb des Aufnahmemittels 12 und, vorzugsweise, zwischen den Verlängerungsblechen 15. Zum Anschluss der Wasserversorgungsleitung 19 an die Zulaufleitung 4 ist ein Verbindungsstück 20, vorzugsweise in Form eines Anschlussstücks, T-Stücks, Kopplungsstücks o. dgl., vorgesehen.

Beim dem dargestellten und bevorzugten Ausführungsbeispiel ist darüber hinaus ein vorzugsweise ringförmiges Stützelement 21 vorgesehen, das auf dem Führungsabschnitt 18 angeordnet ist. Dadurch wird die Zulaufleitung 4 gegenüber dem Führungsabschnitt 18 gesichert bzw. fixiert.

Wie ebenfalls aus Fig. 4 ersichtlich, weist die Prüfanlage 2 ein vorzugsweise plattenförmiges Abstützmittel 22 auf, über das die Zulaufleitung 4 auf der Abstützfläche A abgestützt ist. Insbesondere ist das Verbindungsstück 20 auf dem Abstützmittel 22 angeordnet bzw. abgestützt.

Wie sich nunmehr wiederrum aus Fig. 1 ergibt, ist die Ablaufleitung 5, insbesondere an ihrem axialen Ende, mit einer weiteren Leitung 23 fluidisch verbunden. Die weitere Leitung 23 verläuft dabei im Wesentlichen horizontal und/oder parallel zu der Wasserversorgungsleitung 19. Insbesondere ist auch die weitere Leitung 23 als Rohrleitung ausgebildet und/oder besteht aus einem hitzebeständigen Material, insbesondere aus Metall und/oder einem hitzebeständigen Kunststoff.

Insbesondere weist die weitere Leitung 23 eine gegenüber der Zulaufleitung 4 und/oder der Ablaufleitung 5 und/oder der Wasserversorgungsleitung 19 verringerten Durchmesser auf.

Weiterhin ist an der weiteren Leitung 23 mindestens ein Ventil, beispielsweise ein Entlüftungsventil 24 und/oder ein Sicherheitsventil 25, vorgesehen. Darüber hinaus kann mindestens ein Kugelhahn 26 vorgesehen sein, um überschüssiges Wasser aus der Prüfanlage 2 entsprechend abzuleiten.

Zur Realisierung einer Löschwirkung kann die Prüfanlage 2 mindestens eine (nicht dargestellte) Wasseraustragseinrichtung, beispielsweise in Form eines Sprinklers und/oder einer sonstigen Düse, aufweisen. Prinzipiell kann die Wasseraustragseinrichtung an jeder Stelle der Prüfanlage 2 angeordnet bzw. vorgesehen sein. Entscheidend ist jedoch, dass das aus der Wasseraustragseinrichtung austretende Wasser eine Löschwirkung auf das in dem Aufnahmemittel 12 in Brand gesetzte Brennmittel entfalten kann. Beispielsweise kann die Wasseraustragseinrichtung an der Zulaufleitung 4 und/oder an der Ablaufleitung 5 und/oder der weiteren Leitung 23 angeordnet sein, insbesondere oberhalb des Aufnahmemittels 12, so dass das austretende Wasser direkt auf das Aufnahmemittel 12 auftreffen kann.

Besonders bevorzugt kommt jedoch das Wasserstromventil 3 zum Einsatz, auf das nachfolgend anhand der Fig. 5 und 6 im Detail eingegangen wird.

Das Wasserstromventil 3 weist vorzugsweise ein Ventilgehäuse 27 auf, das mit den Anschlusselementen 8, 9 ausgerüstet ist. Insbesondere besteht das Ventilgehäuse 27 zumindest teilweise aus einem nicht-metallischen Material, vorzugsweise aus Kunststoff.

In der Darstellung gemäß Fig. 5 wurde ein Teil des Ventilgehäuses 27 weggelassen, um eine Ansicht auf das Innere des Ventilgehäuses 27 zu ermöglichen.

Es ist ersichtlich, dass das Wasserstromventil 3 ein Ventilelement 28 aufweist, das beim bevorzugten Ausführungsbeispiel klappenartig ausgebildet ist. Jedoch sind hier auch andere technische Lösungen möglich. Bei der gezeigten Darstellung gemäß Fig. 5 befindet sich das Ventilelement 28 in einer offenen Stellung, d.h. es findet eine Wasserströmung durch das Wasserstromventil 3 hindurch statt. Das Ventilelement 28 ist insbesondere in eine geschlossene Stellung vorgespannt, insbesondere mittels einer Feder. Dadurch nimmt das Ventilelement 28 wieder selbstständig die geschlossene Stellung ein, sobald der Wasserstrom durch das Wasserstromventil 3 hindurch unterbrochen worden ist.

Das Wasserstromventil 3 selbst verfügt über eine automatische Wasseraustragseinrichtung 29.

Besonders bevorzugt handelt es sich bei der Wasseraustragseinrichtung 29 um einen Sprinkler. Diese zeichnet sich dadurch aus, dass der Wasseraustrag automatisch nach Überschreiten eines bestimmten Temperaturwerts bzw. einer bestimmten Wärmeeinwirkung ausgelöst wird. Auf diese Weise wird eine vollautomatisierte Brandbeanspruchungsprüfung ermöglicht.

Wie in der dargestellten Ausführungsform gemäß Fig. 1 dargestellt, befindet sich die Wasseraustragseinrichtung 29 im Prüfzustand an einer dem Aufnahmemittel 12 zugewandten Seite an dem Wasserstromventil 3.

Es versteht sich, dass die Wasseraustragseinrichtung 21 jedoch auch oberseitig oder an einem sonstigen Bereich an dem Wasserstromventil 3 angeordnet sein kann.

Zur Anwendung der Wasseraustragseinrichtung 21 am Wasserstromventil 3 ist insbesondere ein Adapter 30 vorgesehen, der zur fluidischen Anbindung der Wasseraustragseinrichtung 29 an das Nassalarmventil 3 ausgebildet ist. Dadurch wird gleichzeitig mit der Durchströmung des Wasserstromventils 3 der Wasseraustrag über die Wasseraustragseinrichtung 29 sichergestellt.

Darüber hinaus umfasst das Wasserstromventil 3 mindestens einen Temperatursensor 31. Der Temperatursensor 31 kann wahlweise am Ventilgehäuse 27, am Adapter 30 oder einem sonstigen (Gehäuse-)Teil des Wasserstromventils 3 angeordnet werden. Alternativ oder zusätzlich kann mindestens ein Temperatursensor 31 innerhalb des Wasserstromventils 3 angeordnet werden, um die Temperaturentwicklung im Prüfzustand an mindestens einem von einem Wasserstrom um- und/oder durchflossenen Bauteil zu messen.

In den Fig. 5 und 6 sind durch punktförmige Hervorhebungen mögliche Anordnungen der Temperatursensoren 31 an und/oder in dem Wasserstromventil 3 gekennzeichnet.

### Ausführungsbeispiel

### Durchführung des erfindungsgemäßen Prüfverfahrens gemäß einer bevorzugten Ausführungsform der vorliegenden Erfindung:

Das erfindungsgemäße Prüfverfahren kann gemäß einer speziellen Ausführungsform der vorliegenden Erfindung wie nachfolgend beschrieben durchgeführt werden:
Zur Durchführung einer Brandbeanspruchungsprüfung wird zunächst die zuvor erörterte erfindungsgemäße Prüfanlage 2 zur Verfügung gestellt.

Das Wasserstromventil 3 wird als Prüfling an die Prüfanlage 2 angeschlossen, indem das Wasserstromventil 3 an das Leitungsende 6 der Zulaufleitung 4 einerseits und das Leitungsende 7 der Ablaufleitung 5 andererseits angeschlossen wird.

Der Kugelhahn 26 wird geschlossen und über die Wasserversorgungsleitung 19 ein Wasserstrom eingeleitet. Das Wasser fließt so lange in das Rohrnetz, bis der Druck der Wasserversorgung und der im Rohrsystem herrschende Druck ausgeglichen sind. In diesem Zustand befindet sich das Wasserstromventil 3 in einem geschlossenen Zustand, beispielsweise indem das fehlerbelastete Ventilelement 28, welches sich dichtend auf einem zugeordneten Ventil sitzt abstützt. Folglich fließt, wenn das Wasserstromventil 3 betriebsbereit ist, kein Wasser durch das Wasserstromventil 3.

Das Wasserstromventil 3 wird so getestet, wie es auch in der Praxis eingebaut wird, und zwar in einer vertikalen Einbaulage.

Als Aufnahmemittel 12 wird eine Brennstoffwanne mit einer Bodenfläche von 1 m² verwendet. Als Brennstoff werden 60 I Heptan in das Aufnahmemittel 12 eingefüllt. Die Menge und Ausbildung des Brennstoffs ist derart ausgewählt, dass ein Flächenbrand von mindestens 15 Minuten realisiert wird, wobei im Bereich des oberhalb des Aufnahmemittels 12 angeordneten Wasserstromventils 3 im Brandfall Temperaturen von wenigstens 800° C vorliegen.

Nach Entfachen des Flächenbrandes erfolgt insbesondere aufgrund der automatischen Wasseraustragseinrichtung 29, bei der es sich insbesondere um einen Sprinkler handelt, ein Wasseraustrag auf das Aufnahmemittel 12 bzw. den darin entfachten Brand. Aufgrund der Aktivierung der Wasseraustragseinrichtung 29 und der Wasserversorgungseinrichtung der Prüfanlage 2 liegt jetzt ein konstanter Wasserstrom durch das Wasserstromventil 3 vor, da das zuvor geschlossene Ventilelement nun gegenüber dem Ventilsitz abgehoben ist, um das Nachspeisen des Wasserstroms zu ermöglichen.

Während der gesamten Brandbeanspruchungsprüfung werden an verschiedenen Positionen im und/oder am Wasserstromventil 3 die Temperaturen untersucht. Darüber hinaus ist eine Drucküberwachung am Ende der weiteren Leitung 23 vorgesehen. Hierzu ist ein entsprechender Druckaufnehmer vorgesehen.

Zur Vermeidung eines Überschwemmens bzw. Überlaufens von Flüssigkeit aus dem Aufnahmemittel 12 heraus wird der Ablauf 16 mit dem daran angeschlossenen Ablaufeinrichtung 17 geöffnet, um ein bodenseitiges Abfließen der Flüssigkeit aus dem Aufnahmemittel 12 hinaus zu gewährleisten.

Im Ergebnis wird das zu prüfende Wasserstromventil 3 im Rahmen der Brandbeanspruchungsprüfung einem Flächenbrand für mindestens 15 Minuten ausgesetzt, wobei sich während der Prüfung im Bereich des Wasserstromventils Temperaturen von ca. 800° C einstellen.

Nach Durchführung der Brandbeanspruchungsprüfung bzw. Erlöschen des Flächenbrandes wird das beanspruchte Wasserstromventil 3 wieder aus der Prüfanlage 2 ausgebaut. Im Anschluss daran wurde das beanspruchte Wasserstromventil 3 hinsichtlich seiner Grundfunktionen überprüft. Besonderes Augenmerk wurde dabei auf das nicht-metallischen und/oder einen niedrigen Schmelzpunkt aufweisenden Bauteile gelegt.

Im Ergebnis wurde das zuvor geschilderte Prüfverfahren an zehn Prüflingen bzw. Wasserstromventilen 3 und/oder Wasserstromventilstationen durchgeführt. Dabei konnte eine hohe Reproduzierbarkeit festgestellt werden, dahingehend, dass sich an den zu untersuchenden, insbesondere nicht-metallischen und/oder einen niedrigen Schmelzpunkt aufweisenden Bauteilen, dieselben Beanspruchungsspuren finden ließen. Dies spricht für eine hohe Reproduzierbarkeit des erfindungsgemäßen Prüfverfahrens sowie der in diesem Zusammenhang vorgeschlagenen Prüfsysteme.

### Bezugszeichenliste:

- 1: Prüfsystem
- 2: Prüfanlage
- 3: Wasserstromventil
- 4: Zulaufleitung
- 5: Ablaufleitung
- 6: Leitungsende
- 7: Leitungsende
- 8: Anschlusselement
- 9: Anschlusselement
- 10: Zulaufstrom
- 11: Ablaufstrom
- 12: Aufnahmemittel
- 13: Abstützfuß
- 14: Aufnahmehülse
- 15: Verlängerungsblech
- 16: Ablauf
- 17: Ablaufeinrichtung
- 18: Führungsabschnitt
- 19: Wasserversorgungsleitung
- 20: Verbindungsstück
- 21: Stützelement
- 22: Abstützmittel
- 23: Weitere Leitung
- 24: Entlüftungsventil
- 25: Sicherheitsventil
- 26: Kugelhahn
- 27: Ventilgehäuse
- 28: Ventilelement
- 29: Wasseraustragseinrichtung
- 30: Adapter
- 31: Temperatursensor

- A: Auflagefläche
- V: Vertikale

## Patentansprüche

1. Prüfanlage (2) zur Durchführung einer Brandbeanspruchungsprüfung an einem Wasserstromventil (3) und/oder an einem Wasserstromventilsystem, insbesondere an einem Nassalarmventil und/oder an einer Nassalarmventilstation,
wobei die Prüfanlage (2) mindestens eine Zulaufleitung (4) und mindestens eine Ablaufleitung (5) aufweist und
wobei die Prüfanlage (2) mindestens ein Aufnahmemittel (12) zur Aufnahme eines flüssigen Brennstoffs aufweist,
wobei das Aufnahmemittel (12) wannen- oder kastenförmig ausgebildet ist,
wobei das Wasserstromventil (3) in einem Prüfzustand zwischen einem Leitungsende (6) der Zulaufleitung (4) einerseits und einem Leitungsende (7) der Ablaufleitung (5) andererseits fluidisch anschließbar ist,
wobei die Leitungsenden (6, 7) derart ausgebildet und/oder ausgerichtet sind, dass das Wasserstromventil (3) im Prüfzustand in einer vertikalen Einbaulage zwischen den Leitungsenden (6, 7) anschließbar ist,
wobei die Zulaufleitung (4) und die Ablaufleitung (5) zumindest im Wesentlichen vertikal ausgerichtet sind,
wobei die Prüfanlage (2) an eine Wasserversorgungseinrichtung anschließbar ist oder eine Wasserversorgungseinrichtung aufweist, so dass das Wasserstromventil (3) im Prüfzustand von einem Wasserstrom durchströmbar ist und
wobei das Aufnahmemittel (12) mindestens einen rohrförmigen Führungsabschnitt (18) aufweist, über welchen die Zulaufleitung (4), getrennt von dem Brennstoff, durch das Aufnahmemittel (12) hindurchgeführt ist.

2. Prüfanlage nach Anspruch 1, **dadurch gekennzeichnet,**
**dass** die Zulaufleitung (4) und/oder die Ablaufleitung (5) in Längsrichtung verstärkt ausgebildet ist bzw. sind; und/oder
**dass** die Zulaufleitung (4) und/oder die Ablaufleitung (5) als Rohrleitung bzw. Rohrleitungen ausgebildet ist bzw. sind; und/oder
**dass** die Zulaufleitung (4) und/oder die Ablaufleitung (5) aus einem hitze- und/oder feuerbeständigen Material, insbesondere einem Metall- oder Kunststoffmaterial, hergestellt ist bzw. sind.

3. Prüfanlage nach Anspruch 1 oder 2, **dadurch gekennzeichnet,**
**dass** mindestens eines der Leitungsenden (6, 7) flanschartig ausgebildet ist.

4. Prüfanlage nach einem der vorhergehenden Ansprüche, **dadurch gekennzeichnet,**
**dass** am Aufnahmemittel (12) mindestens ein vorzugsweise stutzenartiger Abfluss (16) zum Abführen einer Flüssigkeit aus dem Inneren des Aufnahmemittels (12) vorgesehen ist, insbesondere wobei am Abfluss (16) eine vorzugsweise rohr-, insbesondere siphonartige, Abflussleitung anschließbar ist; und/oder
**dass** das Aufnahmemittel (12) vorzugsweise an Eckbereichen des Aufnahmemittels (12) angeordnete Abstützfüße (13) aufweist, über die das Aufnahmemittel (12) vorzugsweise höhenverstellbar abgestützt ist.

5. Prüfsystem (1) zur Durchführung einer Brandbeanspruchungsprüfung, wobei das Prüfsystem eine Prüfanlage (2) und mindestens ein Wasserstromventil (3) und/oder mindestens ein Wasserstromventilsystem, insbesondere ein Nassalarmventil und/oder eine Nassalarmventilstation, aufweist,
wobei die Prüfanlage (2) mindestens eine Zulaufleitung (4), mindestens eine Ablaufleitung (5) und mindestens ein Aufnahmemittel (12) zur Aufnahme eines vorzugsweise flüssigen Brennstoffs aufweist,
wobei das Wasserstromventil (3) in einem Prüfzustand zwischen einem Leitungsende (6) der Zulaufleitung (4) einerseits und einem Leitungsende (7) der Ablaufleitung (5) andererseits fluidisch angeschlossen ist,
wobei die Prüfanlage nach einem der Ansprüche 1 bis 4 ausgebildet ist.

6. Prüfsystem nach Anspruch 5, **dadurch gekennzeichnet, dass** die Wasseraustragseinrichtung (29) an einer dem Aufnahmemittel (12) zugewandten Seite an dem Wasserstromventil (3) angeordnet und/oder befestigt ist.

7. Prüfsystem nach Anspruch 5 oder 6, **dadurch gekennzeichnet, dass** das Wasserstromventil (3) mindestens eine automatische Wasseraustragseinrichtung (29) aufweist.

8. Prüfsystem nach Anspruch 7, **dadurch gekennzeichnet, dass** die Wasseraustragseinrichtung (29) als Sprinkler ausgebildet ist; und/oder
dass das Wasserstromventil (3) wenigstens einen Temperatursensor (31), vorzugsweise ein Thermoelement, aufweist.

9. Prüfverfahren zur Durchführung einer Brandbeanspruchungsprüfung an einem Wasserstromventil (3) und/oder an einem Wasserstromventilsystem, vorzugsweise an einem Nassalarmventil und/oder an einer Nassalarmventilstation unter Verwendung einer Prüfanlage (2) nach einem der vorhergehenden Ansprüche,
wobei folgende Verfahrensschritte durchgeführt werden,
(a) Bereitstellen der Prüfanlage (2), die mindestens die Zulaufleitung (4) und mindestens die Ablaufleitung (5) aufweist,
(b) Anschließen des Wasserstromventils (3) an das Leitungsende (6) der Zulaufleitung (4) einerseits und an das Leitungsende (7) der Ablaufleitung (5) andererseits,
(c) Entzünden eines Brandmittels um eine Hitzeeiwirkung auf das Wasserstromventil (3) zu bewirken,
wobei das Wasserstromventil (3) im Schritt (b) in einer vertikalen Einbaulage zwischen den Leitungsenden (6, 7) der Zulaufleitung (4) einerseits und der Ablaufleitung (5) andererseits angeschlossen wird und
wobei das Wasserstromventil (3) während der Hitzeeinwirkung von einem Wasserstrom durchströmt wird.

10. Prüfverfahren nach Anspruch 9, **dadurch gekennzeichnet,**
**dass** das Wasserstromventil (3) während der Hitzeeinwirkung kontinuierlich von dem Wasserstrom durchströmt wird; und/oder
**dass** eine vorzugsweise automatische Wasseraustragseinrichtung, insbesondere ein Sprinkler, vorgesehen ist, die infolge der Hitzeeinwirkung nach Überschreiten einer bestimmten Auslösetemperatur ausgelöst wird, um einen Wasseraustrag auf das entzündete Brandmittel zu bewirken.

11. Prüfverfahren nach Anspruch 10, **dadurch gekennzeichnet,**
**dass** durch das Auslösen der Wasseraustragseinrichtung die Wasserdurchströmung durch das Wasserstromventil (3) eingeleitet und/oder initiiert wird.

12. Prüfverfahren nach einem der vorhergehenden Ansprüche, **dadurch gekennzeichnet,**
**dass** während der Hitzeeinwirkung der Temperaturverlauf an und/oder im Wasserstromventil (3) über Temperatursensoren (31), vorzugsweise über Thermoelemente, aufgezeichnet wird.

13. Verwendung einer Prüfanlage (2) nach einem der vorherigen Ansprüche zur Durchführung einer Brandbeanspruchungsprüfung an einem Wasserstromventil (3) und/oder an einem Wasserstromventilsystem, vorzugsweise an einem Nassalarmventil und/oder an einer Nassalarmventilstation.

14. Verwendung eines Prüfsystems (1) nach einem der vorhergehenden Ansprüche zur Durchführung einer Brandbeständigkeitsprüfung an einem Wasserstromventil (3) und/oder an einem Wasserstromventilsystem, vorzugsweise an einem Nassalarmventil und/oder an einer Nassalarmventilstation.

## Claims

1. A test facility (installation) (2) for carrying out a fire stress test on a water flow valve (3) and/or on a water flow valve system, in particular on a wet alarm valve and/or on a wet alarm valve station,
wherein the test facility (2) has at least one feed line (4) and at least one discharge line (5), and
wherein the test facility (2) has at least one receiving means (12) for receiving a liquid fuel,
wherein the receiving means (12) is designed in the shape of a trough or box,
wherein the water flow valve (3) can be fluidically connected in a test state between a line end (6) of the feed line (4) on the one hand and a line end (7) of the discharge line (5) on the other hand,
wherein the line ends (6, 7) are designed and/or aligned in such a way that the water flow valve (3) can be connected in a vertical installation position between the line ends (6, 7) in the test state,
wherein the feed line (4) and the discharge line (5) are aligned at least substantially vertically,
wherein the test facility (2) can be connected to a water supply device or has a water supply device so that a water flow can flow through the water flow valve (3) in the test state, and
wherein the receiving means (12) has at least one tubular guide section (18) via which the feed line (4), separate from the fuel, is guided through the receiving means (12).

2. The test facility according to claim 1, **characterized**
**in that** the feed line (4) and/or the discharge line (5) is or are reinforced in the longitudinal direction; and/or
**in that** the feed line (4) and/or the discharge line (5) is or are designed as a pipeline or pipelines; and/or
**in that** the feed line (4) and/or the discharge line (5) is or are made of a heat-resistant and/or fire-resistant material, in particular a metal or plastic material.

3. The test facility according to claim 1 or 2, **characterized**
**in that** at least one of the line ends (6, 7) is of flange-like design.

4. The test facility according to one of the preceding claims, **characterized**
**in that** at least one preferably nozzle-like drain (16) is provided on the receiving means (12) for discharging a liquid from the interior of the receiving means (12), in particular wherein a preferably tubular, in particular siphon-like, drain line can be connected to the drain (16); and/or
**in that** the receiving means (12) preferably has a support feet (13) arranged at corner regions of the receiving means (12), via which the receiving means (12) is preferably supported in a height-adjustable manner.

5. A test system (1) for carrying out a fire stress test, the test system having a test facility (2) and at least one water flow valve (3) and/or at least one water flow valve system, in particular a wet alarm valve and/or a wet alarm valve station,
wherein the test facility (2) comprises at least one feed line (4), at least one discharge line (5) and at least one receiving means (12) for receiving a preferably liquid fuel,
wherein the water flow valve (3) is fluidically connected in a test state between a line end (6) of the feed line (4) on the one hand and a line end (7) of the discharge line (5) on the other hand,
wherein the test facility is designed according to one of the claims 1 to 4.

6. The test system according to claim 5, **characterized**
**in that** the water discharge device (29) is arranged and/or fastened to the water flow valve (3) on a side facing the receiving means (12).

7. The test system according to claim 5 or 6, **characterized**
**in that** the water flow valve (3) has at least one automatic water discharge device (29).

8. The test system according to claim 7, **characterized**
**in that** the water discharge device (29) is designed as a sprinkler; and/or
**in that** the water flow valve (3) has at least one temperature sensor (31), preferably a thermocouple.

9. A test method for carrying out a fire stress test on a water flow valve (3) and/or on a water flow valve system, preferably on a wet alarm valve and/or on a wet alarm valve station, using a test system (2) according to one of the preceding claims,
wherein the following process steps are carried out:
(a) providing the test facility (2), which comprises at least the feed line (4) and at least the discharge line (5),
(b) connecting the water flow valve (3) to the line end (6) of the feed line (4) on the one hand and to the line end (7) of the discharge line (5) on the other hand,
(c) igniting a fire agent to cause a heat effect on the water flow valve (3),
wherein the water flow valve (3) is connected in step (b) in a vertical installation position between the line ends (6, 7) of the feed line (4) on the one hand and the discharge line (5) on the other hand, and
wherein the water flow valve (3) is flowed through by a water flow during the heat exposure.

10. The test method according to claim 9, **characterized**
**in that** the water flow valve (3) is continuously flowed through by the water flow during the heat exposure; and/or
**in that** a preferably automatic water discharge device, in particular a sprinkler, is provided, which is triggered as a result of the heat action after a certain trigger temperature has been exceeded, in order to bring about a discharge of water onto the ignited fire medium.

11. The test method according to claim 10, **characterized**
**in that** the water flow through the water flow valve (3) is introduced and/or initiated by the triggering of the water discharge device.

12. The test method according to one of the preceding claims, **characterized**
**in that** during the heat exposure the temperature course at and/or in the water flow valve (3) is recorded via temperature sensors (31), preferably via thermocouples.

13. Use of a test facility (2) according to one of the previous claims for carrying out a fire stress test on a water flow valve (3) and/or on a water flow valve system, preferably on a wet alarm valve and/or on a wet alarm valve station.

14. Use of a test system (1) according to any one of the preceding claims for performing a fire resistance test on a water flow valve (3) and/or on a water flow valve system, preferably on a wet alarm valve and/or on a wet alarm valve station.

## Revendications

1. Installation d'essai (2) pour effectuer un essai de résistance au feu sur une vanne de débit d'eau (3) et/ou sur un système de vanne de débit d'eau, en particulier sur une vanne d'alarme humide et/ou sur une station de vanne d'alarme humide,
où l'installation d'essai (2) comporte au moins une conduite d'alimentation (4) et au moins une conduite d'évacuation (5), et
où l'installation d'essai (2) possède au moins un moyen de réception (12) pour recevoir un combustible liquide,
où le moyen de réception (12) est conçu sous la forme d'une auge ou d'une boîte,
où la vanne de débit d'eau (3) peut être raccordée (reliée) fluidiquement dans un état de test entre une extrémité de conduite (6) de la conduite d'alimentation (4) d'une part et une extrémité de conduite (7) de la conduite d'évacuation (5) d'autre part,
où les extrémités de la conduite (6, 7) sont conçues et/ou alignées de telle sorte que la vanne de débit d'eau (3) peut être raccordée dans une position de montage verticale entre les extrémités de la conduite (6, 7) à l'état de test,
où la conduite d'alimentation (4) et la conduite d'évacuation (5) sont alignées au moins sensiblement verticalement,
où l'installation d'essai (2) peut être raccordée à un dispositif d'alimentation en eau ou possède un dispositif d'alimentation en eau de sorte qu'un flux d'eau peut s'écouler à travers la vanne de débit d'eau (3) dans l'état d'essai, et
où le moyen de réception (12) présente au moins une section de guidage tubulaire (18) par laquelle la conduite d'alimentation (4), séparée du carburant, est guidée à travers le moyen de réception (12).

2. Installation d'essai selon la revendication 1, **caractérisée**
**en ce que** la conduite d'alimentation (4) et/ou la conduite d'évacuation (5) est/sont renforcée(s) dans le sens longitudinal; et/ou
**en ce que** la conduite d'alimentation (4) et/ou la conduite d'évacuation (5) est/sont conçue(s) comme un ou plusieurs pipelines; et/ou
**en ce que** la conduite d'alimentation (4) et/ou la conduite d'évacuation (5) est/sont fabriquée(s) dans un matériau résistant à la chaleur et/ou au feu, notamment en métal ou en matière plastique.

3. Installation d'essai selon la revendication 1 ou 2, **caractérisée**
**en ce qu'**au moins une des extrémités de la conduite (6, 7) est de type bride.

4. Installation d'essai selon l'une des revendications précédentes, **caractérisée**
**en ce qu'**au moins une évacuation (16), de préférence en forme de buse, est prévue sur le moyen de réception (12) pour évacuer un liquide de l'intérieur du moyen de réception (12), en particulier où une conduite d'évacuation de préférence tubulaire, en particulier en forme de siphon, peut être raccordée à l'évacuation (16); et/ou
**en ce que** le moyen de réception (12) comporte de préférence des pieds d'appui (13) disposés dans les zones d'angle du moyen de réception (12), par lesquels le moyen de réception (12) est de préférence soutenu de manière réglable en hauteur.

5. Système d'essai (1) pour effectuer un essai de résistance au feu, le système d'essai comportant une installation d'essai (2) et au moins une vanne de débit d'eau (3) et/ou au moins un système de vanne de débit d'eau, en particulier une vanne d'alarme humide et/ou une station de vanne d'alarme humide,
où l'installation d'essai (2) comprend au moins une conduite d'alimentation (4), au moins une conduite d'évacuation (5) et au moins un moyen de réception (12) pour recevoir un carburant de préférence liquide,
où la vanne de débit d'eau (3) est raccordée (reliée) fluidiquement dans un état de test entre une extrémité de conduite (6) de la conduite d'alimentation (4) d'une part et une extrémité de conduite (7) de la conduite d'évacuation (5) d'autre part,
où l'installation d'essai est conçue selon l'une des revendications 1 à 4.

6. Système de test selon la revendication 5, **caractérisé**
**en ce que** le dispositif d'évacuation de l'eau (29) est disposé et/ou fixé à la vanne de débit d'eau (3) sur un côté faisant face au moyen de réception (12).

7. Système de test selon la revendication 5 ou 6, **caractérisé**
**en ce que** la vanne de débit d'eau (3) est équipée d'au moins un dispositif automatique d'évacuation de l'eau (29).

8. Système de test selon la revendication 7, **caractérisé**
**en ce que** le dispositif d'évacuation de l'eau (29) est conçu comme un arroseur; et/ou
**en ce que** la vanne de débit d'eau (3) est équipée d'au moins un capteur de température (31), de préférence un thermocouple.

9. Méthode d'essai pour effectuer un essai de résistance au feu sur une vanne de débit d'eau (3) et/ou sur un système de vanne de débit d'eau, de préférence sur une vanne d'alarme humide et/ou sur une station de vanne d'alarme humide, en utilisant un système d'essai (2) selon l'une des revendications précédentes,
où les étapes suivantes du processus sont réalisées :
(a) fournir l'installation d'essai (2) laquelle comprend au moins la conduite d'alimentation (4) et au moins la conduite d'évacuation (5),
b) raccorder la vanne de débit d'eau (3) à l'extrémité (6) de la conduite d'alimentation (4) d'une part et à l'extrémité (7) de la conduite d'évacuation (5) d'autre part,
(c) allumer un agent d'incendie pour provoquer un effet de chaleur sur la vanne de débit d'eau (3),
où la vanne de débit d'eau (3) est raccordée à l'étape (b) dans une position de montage verticale entre les extrémités (6, 7) de la conduite d'alimentation (4) d'une part et la conduite d'évacuation (5) d'autre part, et
où la vanne de débit d'eau (3) est traversée par un flux d'eau pendant l'exposition à la chaleur.

10. Méthode d'essai selon la revendication 9, **caractérisée**
**en ce que** la vanne de débit d'eau (3) est traversée en permanence par le flux d'eau pendant l'exposition à la chaleur; et/ou
**en ce qu'**il est prévu un dispositif d'évacuation de l'eau, de préférence automatique, en particulier un sprinkler, qui se déclenche sous l'effet de la chaleur après le dépassement d'une certaine température de déclenchement, afin de provoquer une décharge d'eau sur le milieu enflammé.

11. Méthode d'essai selon la revendication 10, **caractérisée**
**en ce que** le débit d'eau à travers la vanne de débit d'eau (3) est initié et/ou déclenché par le déclenchement du dispositif d'évacuation de l'eau.

12. Méthode d'essai selon l'une des revendications précédentes, **caractérisée**
**en ce que**, pendant l'exposition à la chaleur, l'évolution de la température au niveau et/ou dans la vanne de débit d'eau (3) est enregistrée par des capteurs de température (31), de préférence par des thermocouples.

13. Utilisation d'une installation d'essai (2) selon l'une des revendications précédentes pour effectuer un essai de résistance au feu sur une vanne de débit d'eau (3) et/ou sur un système de vanne de débit d'eau, de préférence sur une vanne d'alarme humide et/ou sur une station de vanne d'alarme humide.

14. Utilisation d'un système d'essai (1) selon l'une des revendications précédentes pour effectuer un essai de résistance au feu sur une vanne de débit d'eau (3) et/ou sur un système de vanne de débit d'eau, de préférence sur une vanne d'alarme humide et/ou sur une station de vanne d'alarme humide.
